# EUROPEAN PATENT SPECIFICATION

(11) **EP 1 428 302 B1**
(45) Date of publication and mention of the grant of the patent: **08.03.2006**
(21) Application number: 02759617.0
(22) Date of filing: 10.09.2002
(51) Int. Cl.: H02G 15/115, H02G 15/18

(54) **MULTI-PART INSULATING COVER**
MEHRTEILIGE ISOLIERUMHÜLLUNG
COUVERTURE ISOLANTE A PLUSIEURS PARTIES

(30) Priority: 21.09.2001 EP 01122793
(43) Date of publication of application: 16.06.2004
(73) Proprietor: 3M Innovative Properties Company, St. Paul, MN 55133-3427 (US)
(72) Inventor: BRANDT, Konrad, 40237 Duesseldorf (DE); CEKIC, Seref, 41542 Dormagen (DE); KITZER, Peter, NL-6101 BZ Echt (NL); LOHMEIER, Gerhard, 50937 Köln (DE); OTT, Albrecht, 40670 Meerbusch (DE)
(74) Representative: Hilleringmann, Jochen
(86) International application number: PCT/US2002/028764
(87) International publication number: WO 2003/028182

(56) References cited:
- EP-A- 0 530 952
- EP-A- 0 619 636
- EP-A- 0 750 381
- WO-A-95/11542
- DE-A- 3 124 374
- DE-U- 8 805 295
- US-A- 4 585 607

## Description

### BACKGROUND OF THE INVENTION

### Field of the Invention

The present invention relates to a protective cover over a junction of the type formed between wires and optical and electrical cables and more particularly to at least one elastomeric cover held in expanded condition on a support for positioning around a junction before crushing or otherwise collapsing the support core to shrink the elastomeric cover into contact with the junction. Preferably a protective cover according to the present invention includes multiple overlapping covers selected to insulate and seal e.g. cable junctions having shapes or sizes requiring a plurality of elastomeric covers for adequate protection.

### Description of the Related Art

A wide variety of covers have been developed to protect connections, splices, and terminations that are part of cable systems for energy distribution and communication networks. Suitable cover materials are known to include thermoplastic polymers for heat shrink applications and cold-shrink elastomers that substantially return to their original size and shape after prolonged storage in an expanded condition, at room temperature.

DE-U-88 05 295 discloses a cable junction for connecting first and second cables of the same outer diameter by a cold shrink cover comprising a first elastic tubular member and a second elastic tubular member substantially of the same diameters. These tubular members are laid over the cable junction by a rolling technique.

US-A-4,585,607 and EP-A-0 750 381 both disclose an insulating and protecting cover for a cable junction comprising a single shrinkable sleeve.

US-A- 5,844,170 discloses a cold-shrink cable closure assembly including one embodiment comprising an outer elastic tubular member and an inner elastic tubular member adjacent the outer one. The elastic outer tubular member extends in longitudinal direction beyond both longitudinal ends of the inner tubular member. Inside the inner tubular member there is provided a portion of flowable material. The known assembly provides for a three-component electric stress-control system which is supported in a pre-stretched condition by means of primary and secondary support cores of helically wound ribbon. Removal of the support cores from inside the tubular arrangement allows it to shrink to its original dimensions. The flowable material and the materials of the two tubular members of the known system are selected to control electrical stress within the tubular arrangement.

WO-A-98/40941 describes a pre-stretched elastic tubular member, which is folded to provide an inner portion and an outer portion. Each portion of the elastic tubular member is held in a radially expanded condition by separate supporting means in the form of hollow cores made from helically wound ribbons. The folded and expanded structure occupies less space than conventional shrinkable sleeves.

US-A-6,111,200 comprises a cold-shrinkable protection element that is useful for covering a joint between two electrical cable ends. The protection element includes first and second elastic sleeves capable of expanding radially when coaxially superimposed each upon the other. A difference in material composition of the first and second elastic sleeves facilitates installation and repair of cable junctions.

EP-A-0 422 567 and EP-A-0 780 949 disclose expandable sleeves including several coaxial layers wherein each layer is distinguishable from the other layers. The sleeves may be stored in expanded condition as cold-shrink structures for controlling electrical stress associated with power cable splices, including splices formed between cables of different radii.

Prior art covering devices may be used to protect a cable connector, cable termination or cable splice particularly for outdoor cable installations requiring protection against bad weather conditions. Installations requiring such protection include connectors, terminations and splices used to attach cables from antennas to wireless telecommunication systems. In this case two coaxial cables attach the antenna to a radio base station that is wired into a telecommunications network. The location of the base station may be at a significant distance from the antenna that normally occupies a position on top of a support tower. Power losses affecting transmission signals between the radio base station and the antenna may be reduced using a large cable, so-called feeder cable, extending from the radio base station towards the antenna. Due to its large diameter, the feeder cable is rather stiff and may not bend sufficiently to allow the cable to connect to an antenna. This problem may be overcome using a connector between the feeder cable and a smaller coaxial cable or jumper cable, which is smaller in diameter than the feeder cable. The smaller diameter jumper cable has the flexibility necessary for making connection to the antenna.

Cold shrink covers provide protection for wire connections, terminations and splices. However, problems occur when the connection involves cables differing in radial dimensions e.g. corresponding to those of a large feeder cable and a small jumper cable. It may not be possible to cover this cable combination using a single cold shrink cover. If the jumper cable is smaller in diameter than the minimum diameter to which the covering article can shrink, there is a danger that a gap will occur between the covering article and the outer surface of the jumper cable.

Earlier solutions to this problem include wrapping tape or layering tubes around the smaller diameter cable to reduce the amount of shrinkage required of a cold-shrink covering article. A pre-stretched tube, manufactured to have a narrow opening at one end and a wide opening at the other, also overcomes the problem of protecting connections between cables of differing radii. The pre-stretched tube having longitudinal portions of different radius in its structure may be known generally as a pre-molded tubular article or commercially as a cold shrink boot represented by products available from 3M Company. Typically, a cold shrink boot uses a support structure suitable for the larger and smaller radial dimensions of the end portions of the pre-molded article. The support structure holds the molded boot in a stretched condition that does not cause the elastic material of the cold shrink boot to split or develop a permanent set. Although cold shrink boots solve the problem of protecting junctions between cables of differing radii, it will be appreciated that a selection of many different boots would be required to effectively protect all the conceivable combinations of cable diameters.

Available solutions for protecting connections, terminations and splices, involving cables of different radii, require further improvement. For example, application of a modular concept for sealing e.g. cables that differ in diameter is not known. To avoid problems with sealing cable junctions involving cables differing significantly in diameter, there is a need for cable covers that are convenient to apply and provide suitable protection without the need to meet specific design criteria based upon cable radius.

### SUMMARY OF THE INVENTION

The present invention provides improved covers for protecting cable connections and splices and related structures, when such structures include differing shapes and dimensions as defined in claim 1. The dependent claims relate to individual embodiments of the invention.

Covers according to the present invention comprise at least two shrinkable tubular members for covering different portions of a cable junction formed between cables of different diameter or held together using a cable connector of selected dimensions. Sequential application of shrinkable tubular members produces, for example, a two-part cover that optionally includes a region in the center of the cover where the edge of a first cold-shrink tube touches and overlaps the edge of a second cold-shrink tube. The first tube has a size to shrink snugly around one cable or fitting on one side of the cable junction. The second tube shrinks to grip the surface of a second cable on the other side of the cable junction. The radial dimension of the second tube is significantly different from that of the first tube, after both have shrunk. Positioning of the first tube and the second tube produces the required overlapped cover portion which e.g. is needed for forming a seal against penetration by fluids or other contaminants. Preferably the overlapped cover portion forms an off-center seam having displacement towards the smaller diameter tube. The length and dimensions of a connection or termination determines whether a multipart cover according to the present invention includes two or more individual cold shrink tubes.

A preferred multi-part cover according to the present invention uses two pre-stretched tubes having different diameters, as described above. Another embodiment of the present invention uses three pre-stretched tubes of varying dimensions. The three-part cover may be used to protect, for example, a pair of cables of different diameter that are held together using a connector that is wider than either of the cables it connects. A connection of this type requires a suitably sized cold-shrink tube to cover an end portion of each cable and connector terminal portion. The space occupied by the connector, between the connected cables, should also be covered using a cold-shrink tubular member positioned with its ends overlapping the previously applied cold-shrink tubes. Application of cold-shrink tubes to a cable produces a covered cable having a thickness that includes the thickness of the tubular element and materials such as sealant or mastic and fragments from collapsed supports that remain trapped underneath a tubular element after it shrinks. In the embodiment using a three-part cover, the ends of the center member form overlapping seams with smaller diameter tubular members on either side of it. The covered cable, described above, has an outer dimension that reduces the amount that the center member needs to shrink. Other overlapping arrangements may be used providing that a multi-part cold-shrink cover gives sufficient protection to an underlying connection.

For a variety of reasons cold shrink tubes initially supported in expanded condition using crushable cores are resorted to. Advantages of cold shrink tubes include the elimination of a heating step that might either damage a cable junction or release toxic combustion products. In addition, expandable cold shrink sleeves may have thicker walls than heat shrink sleeves, which require wall thickness restrictions for process safety and optimum rate of heat conduction through the heat shrink material.

Cold shrink, pre-stretched tubes are essentially two part structures comprising an elastic tube supported in an expanded condition by a support that collapses under stress. Materials suitable for manufacture of the elastic tube include flexible polymers and elastomers including silicone elastomers and ethylene propylene diene monomer (EPDM) terpolymers. The elastic properties, inherent to elastomeric materials, cause the elastic tube to shrink or recover substantially to its original dimensions following collapse of the support.

Known supports for expanded cold shrink tubular members include helically wound ribbon cores and cores referred to herein as crushable cores that disintegrate into fragments when squeezed with sufficient force. Further description of helically wound ribbon cores exists in a number of references including DE-A-39 43 296, EP-A-291 213, EP-A-0 399 263, EP-A-0 500 216, EP-A-0 631 357, EP-A-0 637 117, EP-A-0 702 444, U.S.-A 3,515,798, U.S.-A-4,503,105, U.S.-A-5,098,752, WO-A-95/11542, and WO-A-95/31845.

A variety of references describe structures and materials useful for fabrication of crushable cores. Relevant information is available from references such as EP-A-530 952, EP-A-750 381, U.S.-A-5,406,871 and U.S.-A-5,746,253. Protective covers according to the present invention preferably use crushable supports, which have advantages when compared to supports of helically wound ribbon. A significant advantage is the retention of crushed core fragments by elastic cover tubes after shrinking from their expanded condition. Retention of core fragments within a recovered elastomeric tube overcomes the problem of disposal of discarded ribbons produced by collapsed helically wound support cores. Also, cold shrink tubular members using crushable supports require less space for installation because shrinkage occurs simply by squeezing the exterior of the expanded tube, causing the underlying support to disintegrate into fragments. Collapse of a helically wound support requires enough space to withdraw an extended length of ribbon from inside the body of the support. Ease of installation is a benefit when space for access is limited or the application of a protective cover requires an installer to operate at an elevated location or otherwise precarious position.

Previous description of protective covers according to the present invention indicates the need for at least two cold shrink tubes that differ in their radial dimension. The radius of each tube depends upon the radii of the cables used to form a cable junction. Formation of a sealed protective cover requires positioning of the expanded tubes so that, after shrinking, one of the cold shrink tubes overlaps the other. The skill of the installer has a significant influence upon the correct positioning of the expanded tubes before they shrink to provide a protective cover.

Elimination of the need for multiple cold shrink sleeves would further improve the process of installing protective covers according to the present invention. This is possible using an embodiment of the present invention, using a modular concept, in which a one-piece, crushable support has a design that includes at least two crushable portions that may differ in diameter. The crushable portions lie on either side of a non-crushable transition zone. Cold shrink tubes, held in an expanded condition around the crushable portions of the support also extend towards each other to provide an overlapping seam over the non-crushable transition zone. An overlapped seam may be used even though the transition zone also provides protection. The overlapped seam is not needed when the material used for the transition zone has sufficient strength to resist damage during handling and normal use.

When used for protective covering of a cable junction the one-piece cold shrink structure, that includes at least two pre-stretched tubes, may be moved so that the transition zone is centrally located between cables that form the cable junction. Application of pressure, by squeezing the ends of the one-piece cold shrink structure, causes collapse of the crushable portions accompanied by recovery of the expanded elastic tubes to grip the covered portions of the cables. There is no change in the size and shape of the transition zone, which continues to provide support for the ends of the elastic tubes. As described, the use of a single, crushable support core, including solid transition zones, facilitates installation of multiple cold shrink tubes around junctions between cables. Pre-positioning of overlapped pre-stretched tubes on a single support, referred to herein as a pre-formed cover, increases the probability of forming a watertight seam when a protective cover shrinks around a cable junction.

One embodiment of a cold shrink cover according to the present invention may include a multi-zone support core having the first hollow collapsible support integrally formed with the second hollow collapsible support. A multi-zone support allows the formation of a pre-mounted protective cover as a modular, unitary structure that includes multiple elastic tubular members held in expanded condition. The multi-zone support core may include a crush resistant transition zone separating a first hollow collapsible support from a second hollow collapsible support.

Terms used herein have the meanings indicated as follows:

Terms including "support" or "support core" or "support structure" or "core" or the like may be used interchangeably herein to describe an article suitable for placement inside an expanded elastic cover to hold the elastic cover in an expanded condition. One or more supports may be included with cold shrink covers according to the present invention.

The term "collapsible support" and related terms refer to a support adapted to collapse during application of force to allow an expanded elastic cover, held around the support, to shrink towards its original dimensions. Collapsible supports include those formed by molding that produces a "crushable support or core," which collapses under compressive force, and those formed by spot-welding together wraps of a plastic strip, spirally wound as a helix, to produce a tube also referred to herein as a "ribbon core." Ribbon cores collapse under tensile force that destroys spot-welds between wraps, unzipping the core and returning it to its original ribbon form.

The term "modular" is used for describing unitary structures that may include support elements, adapters, including multiple part adapters, and elastic tubular elements needed for covering cable junctions according to the present invention.

The term "multi-zone" applies to a particular type of crushable support that includes perforated or lattice portions and continuous wall, crush-resistant portions between perforated or lattice portions.

Use of the term "cable junction" identifies a point in a cable structure at which a first cable is connected or joined to a second cable. In the case of the present invention the diameter of the first cable is different, and may be significantly different, from the diameter of the second cable. Cable conductors may be joined directly together in a cable junction or may be attached to each other using an intervening cable connector.

The term "protective cover" refers to structures that enclose cable junctions to seal out fluids and other environmental contaminants that may impair signal transmission in communications networks and energy transmission grids. A protective cover may include a "sealant" material as a further barrier against ingress of undesirable contaminants. Suitable sealant materials include commonly used mastic compounds. A fluid sealant provides a containment matrix around fragments of a crushed support.

A "multipart cover," as used herein, means a protective cover that uses two or more elastic tubular elements to enclose and protect a cable junction.

Terms such as "pre-mounted cover," "pre-formed cover," and "preassembled cover" and the like, refer to elastic tubular elements held in expanded condition on a support. Pre-mounted tubes may be stored until needed to protect a cable or cable junction at which time the support collapses, during application of force, to allow the elastic tubular element to shrink into gripping contact with the cable or cable junction.

The term "crush resistant" refers to portions of a multi-zone support and particularly to the portion of the support that, being substantially non-crushable, withstands application of force sufficient to cause collapse of collapsible support structures.

Terms including "cold shrink tube", "pre-stretched tube", "cold shrink tubular element" and the like refer to structures comprising at least one elastic tube supported in an expanded condition by a support that collapses under compressive or tensile stress.

### BRIEF DESCRIPTION OF THE DRAWINGS

The invention will now be described in greater detail with reference to the attached drawings in which:
Figure 1 provides an isometric, schematic representation of an application using multi-part cold shrink covers according to the present invention to protect cable junctions between a signal antenna and a communications base station.
Figure 2 illustrates a combination of coaxial cables having different radii that may be used to provide connection between communications base stations and signal antennas.
Figure 3 is a schematic illustration of coaxial cables of markedly different radii that may be used to connect communications base stations to signal antennas.
Figure 4 shows a side view of a pair of cables of differing diameter (see Figure 2) before formation of a connection between them.
Figure 5 is a side view of a pair of cables of Figure 2 after formation of a connection between them.
Figure 6 provides a side view of a pair of cables of Figure 2 showing the positioning and partial collapse of a cold shrink tube around the cable of smaller diameter.
Figure 7 provides a side view of a pair of cables of Figure 2 showing the positioning and partial collapse of a cold shrink tube around a portion of a previously applied cold shrink tube and a portion of the cable of larger diameter.
Figure 8 is a side view of a completed multi-part cover according to the present invention showing protection of cables of Figure 2 and overlap of tubular members shrunk around the connection.
Figure 9 shows a side view of a pair of cables of markedly differing diameter (see Figure 3) before formation of a connection between them.
Figure 10 is a side view of a pair of cables of Figure 3 after formation of a connection between them.
Figure 11 provides a side view of a pair of cables of Figure 3 showing the positioning and partial collapse of a cold shrink tube around the cable of smaller diameter.
Figure 12 provides a side view of a pair of cables of Figure 3 showing the positioning and partial collapse of a cold shrink tube around a portion of a previously applied cold shrink tube and a portion of the cable of significantly larger diameter.
Figure 13 is a side view of a completed multi-part cover according to the present invention showing protection of cables of Figure 3 and overlap of tubular members shrunk around the connection.
Figure 14 shows a side view of a coaxial cable positioned for termination at an antenna.
Figure 15 is a side view of a termination between a coaxial cable and an antenna.
Figure 16 provides a side view showing the positioning and partial collapse of a cold shrink tube over a termination between a cable and an antenna.
Figure 17 is a side view of cold shrink tube shrunk around a termination to protect the termination from the environment.
Figure 18 is a side view of another embodiment of a completed multi-part cover showing overlap of tubular members to protect two coaxial cables and a connector body used to connect the cables together.
Figure 19 is a schematic representation of a support according to the present invention including crushable end portions separated by a crush resistant transition zone.
Figure 20 shows a partially cut-away side view illustrating the positioning of overlapping cold-shrink tubes held in expanded condition by crushable support portions.
Figure 21 is a schematic representation of a one-piece cold shrink structure that includes a pair of overlapping cold shrink tubes held in expanded condition using a crushable support that includes a crush resistant transition zone between crushable portions of different diameter.
Figure 22 provides a schematic representation of cable junction protected by a cover according to the present invention that may be used.with cables of different radii.
Figure 23 is a schematic cross sectional view showing a support including crushable end sections covered with overlapping cold shrink tubes held in expanded condition.

### DETAILED DESCRIPTION OF PREFERRED EMBODIMENTS

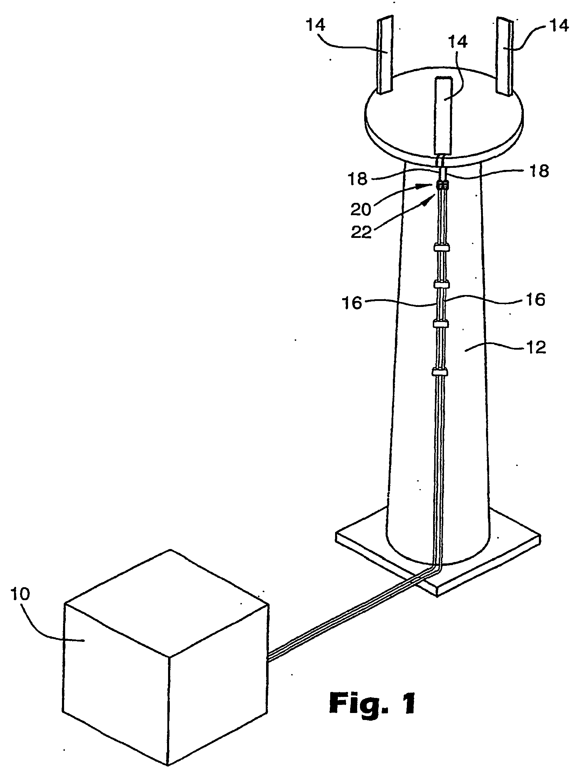

The present invention provides articles that may be used individually or combined in a variety of ways to provide protective coverings that seal out fluids and other environmental contaminants from junctions required in the formation of communications networks and energy distribution grids. Referring now to the figures wherein like numbers refer to like parts throughout the several views, Figure 1 provides a schematic illustration of structures that form part of a wireless communications network. A base station 10 requires connection to a tower 12 that supports several antennas 14. As illustrated, Figure 1 includes three antennas 14 as signal emitters or receivers. Each antenna 14 fulfils the need for two-way communication using two main cables that connect the antenna 14 to the radio base station 10. One main cable transmits signals from the radio base station 10 to an antenna 14. The other main cable carries signals, received by the antenna 14, to the radio base station 10 for processing into the communications network.

Although addressing only one antenna 14, the following discussion applies to any number of antennas that may be part of a wireless communications tower 12. Each main cable connecting an antenna 14 to a radio base station 10 uses at least two coaxial cables 16, 18. A coaxial cable 16, also referred to herein as a feeder cable or a second cable, has a diameter that is larger than a first cable 18, which may be referred to as a jumper cable. The increased size of the feeder cable 16 compared to the jumper cable 18 relates to distance between the antenna 14 and the base station 10. Power losses affecting transmission signals between the radio base station and the antenna may be reduced when the cable 16 is a large diameter feeder cable that reaches close to the antenna 14. Large diameter cables 16 tend to be too rigid and inflexible to bend sufficiently for direct attachment to an antenna 14. The smaller diameter, more flexible, first cable 18 overcomes this problem to provide a continuous signal carrier from the antenna 14 to the base station 10.

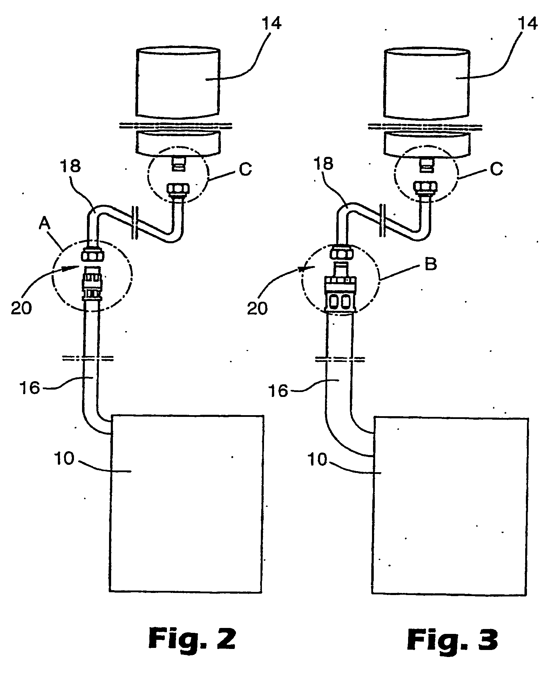

Figure 2 and Figure 3 provide schematic illustrations showing combination of cables 16, 18 for connecting an antenna 14 to a base station 10. As shown, the feeder cable 16 portion of the main cable varies in diameter between the figures but the jumper cable 18 appears to be the same in both figures. This is for example only and is not intended to be limiting in any way. The need for connection of a feeder cable 16 to a jumper cable 18 may be satisfied using a coaxial cable connector 20. Circled portions of each figure, identified by letter codes A and B respectively, indicate cable 16, 18 and connector 20 portions that require protection by multi-part covers according to the present invention.

The following discussion of cable dimensions is intended for example only to show differences in the radii of cables that may form the link or main cable between a base station 10 and an antenna 14. A first cable 18 may have an outer diameter of 1.3 cm (1/2 inch) while the outer diameter of the second cable 16 may be between 2.2 cm (7/8 inch) and 4.1 cm (1.63 inch). Coaxial cable diameters may vary further depending on other factors such as thickness of the cable outer wall, which may differ from cable manufacturer to cable manufacturer. The need to join cables of varying diameter may be met using suitable cable connectors that have internal dimensions corresponding to differences in cable radii.

Figure 2 and Figure 3 illustrate two types of connection including a cable junction formed between cables 16, 18 using a cable connector 20, and a cable termination designated by letter code C that includes a jumper cable 18 and a terminal portion of an antenna 14. Covers according to the present invention provide suitable protection for both types of connection using the least possible number of parts to cover and accommodate differences in cable sizes.

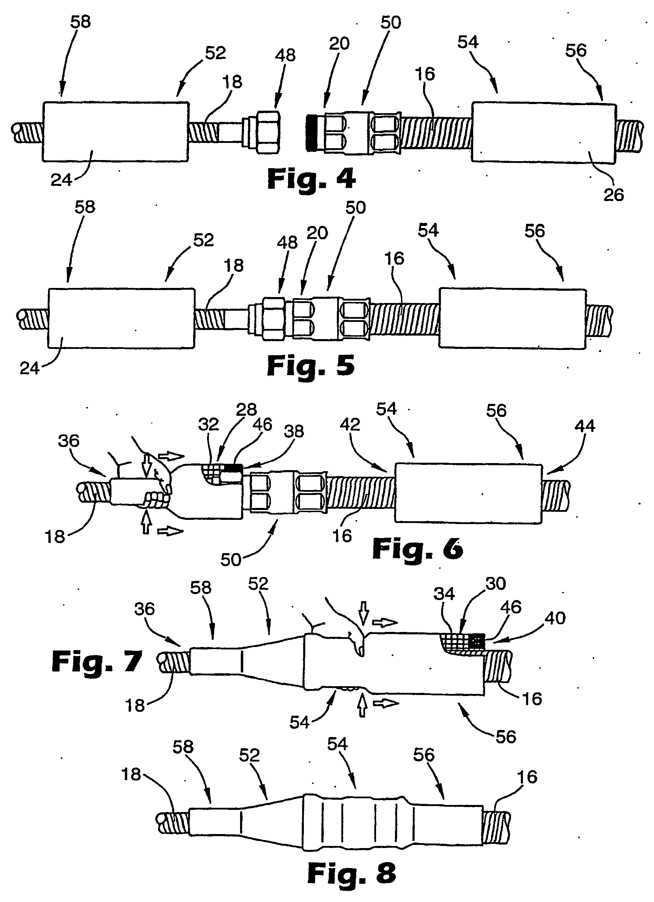

Figures 4, 5, 6, 7 and 8 illustrate the steps required to install a protective cover over a cable junction between a feeder cable 16 and a smaller diameter jumper cable 18. A cover according to the present invention comprises a first cold shrinkable elastic tubular member 24 and a second cold shrinkable elastic tubular member 26. Materials suitable for manufacture of elastic tubular members include flexible polymers and elastomers including silicone elastomers and ethylene propylene diene monomer (EPDM) terpolymers. The elastic properties, inherent to an elastomeric material, causes a cold shrink elastic tubular member, held in expanded condition on a support, to shrink or recover towards its original dimensions following collapse of the support.

After placing the cold shrink elastic tubular members 24, 26 over the feeder cable 16 and jumper cable 18 respectively, the formation of a junction between the two coaxial cables 16, 18 includes screwing the threads of the female fitting 48 over threaded male fitting 50. The assembled connector 20 appears as in Figure 5, before positioning and collapsing the cold shrink elastic tubular members 24, 26 to form a protective cover. Each tubular member 24, 26 includes an elastic tube held in expanded condition on a collapsible support 32, 34, preferably a crushable core made from plastics material and having points of weakness that fracture under pressure. Application of sufficient squeezing force to a crushable core 32, 34 causes a plurality of points to fracture producing cracks in the support. Propagation of cracks causes collapse of the support core 32, 34. As the core collapses the expanded tube 24, 26 shrinks to grip and protect a portion of the surface of the cable junction. Fragments of the crushable supports 32, 34 remain between the cold shrink tubular elements 24, 26 and the outer surfaces of the cable junction.

Preferred crushable supports according to the present invention are lattice type support cores produced using injection molding of plastics including polymethylmethacrylate (PMMA), and polystyrene and mixtures thereof. A lattice type support core has transverse members that connect longitudinal members together. The transverse members include points of weakness resulting from the flow characteristics of molten plastic as it fills the mold. During injection, molten plastic enters from an annulus at one end of the support mold so that material flows preferentially to form longitudinal members from one end of the mold to the other before flowing into parts of the mold corresponding to the transverse members. This method of injection molding creates a join or weld line between two fronts of molten plastic material flowing from adjacent longitudinal members into a particular, connecting, transverse member. The join or weld lines lie substantially at the middle of each transverse members to produce discrete points of weakness compared to the remainder of the support core structure. When placed under compressive force an injection molded, crushable support will collapse producing fragments by preferential fracture at the weakened join lines.

Figure 6 shows the result of positioning a cold shrink tubular member 24 around the female fitting 48 of the connector 20 and an end portion of the jumper cable 18, followed by squeezing the outer end 58 of the cold shrink tubular member 24 to cause its collapse around the jumper cable 18. Application of pressure by squeezing the other end 52 of the cold shrink tubular member 24 completes installation of a first part of a multi-part protective cover according to the present invention.

Figure 7 illustrates positioning of the second cold shrink tubular member 26 into an overlapping relationship with the first cold shrink tubular member 24 before squeezing and collapsing the support 34 to allow the tubular member 26 to shrink around the male fitting 50 of the cable connector 20 and the feeder cable 16. The sealing capacity of a recovered cold shrink tube may be improved, and a tight seal provided around a cable junction, using mastic or gasket material as a seal 46 at the ends of the elastic tubular members 24, 26 supported in its radially expanded condition by the crushable core. Such use of mastic and gasket materials is known in the art for improving seals between a protective cover and the object that is covered.

Figure 8 shows the result of applying a protective cover, including overlapped elastic tubes 24, 26, to a cable junction that has a complex shape produced by joining cables 16, 18 of differing diameter using a relatively bulky coaxial cable connector 20. Fragments of the crushable supports 32, 34 remain between the cold shrink tubular elements 24, 26 and the outer surfaces of the cable junction. This provides the advantage of cover installation without generation of waste such as plastic ribbon produced during application of cold shrink tubes supported on helically wound cores.

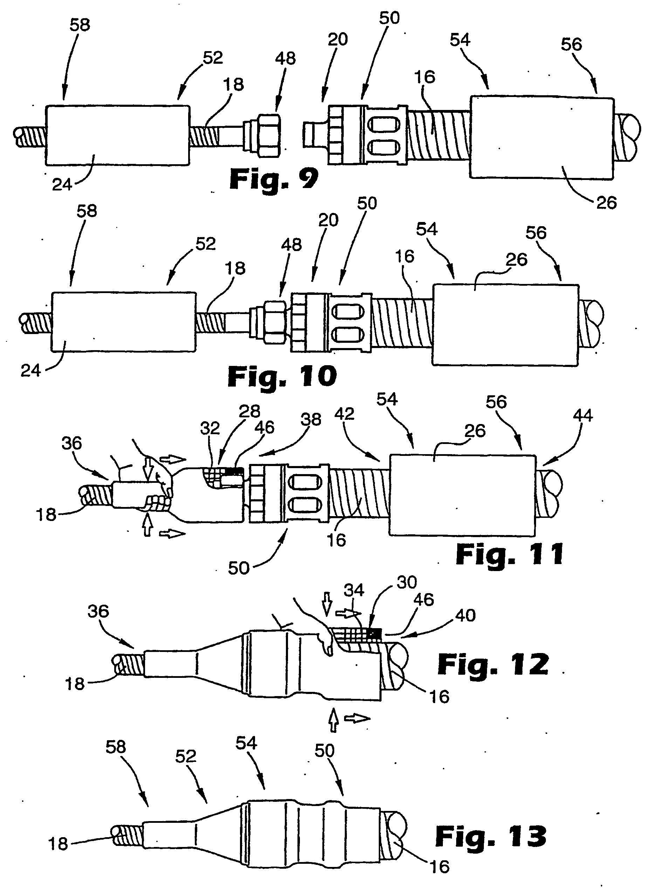

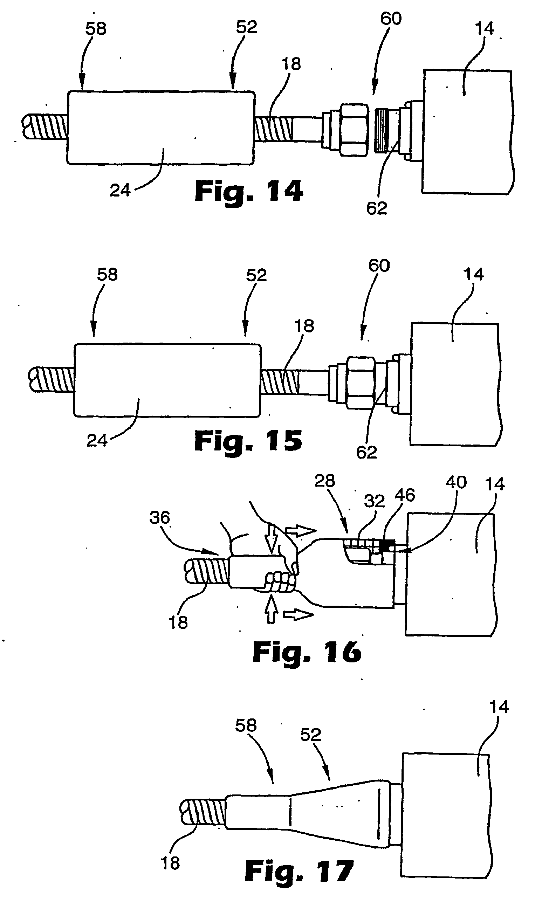

Figures 9, 10, 11, 12 and 13 illustrate the steps required to install a protective cover over a cable junction between a jumper cable 18 similar to that of Figure 4 and a feeder cable 16 of larger diameter as depicted in Figure 3. Figure 10 shows the positioning of cold shrink tubular elements 24, 26 around the respective cables 16, 18, before screwing the male fitting 50 of the coaxial cable connector 20 into the female fitting 48 to form a cable junction. The positioning of cold shrink tubular elements around the cable junction (see Figure 11 and Figure 12) precedes collapse of the crushable supports 32, 34 allowing the tubular elements to shrink into a gripping relationship with the outer surfaces of the cable junction. A fully installed cover, as illustrated in Figure 13, includes overlap of one tubular element 24 by the other tubular element 26. This provides a seam that prevents water and other contaminants from seeping under the protective cover. Preferably a band of mastic, at each end of each tubular element 24, 26, provides an added seal 46 for more effective protection of the cable junction.

Figures 14, 15, 16, and 17 show the sequence of installing a cold shrink tubular element 24 to provide a covering over the cable termination joining the jumper cable 18 and the antenna 14. In this case a tubular element 24, placed in expanded condition around the jumper cable 18, has an internal diameter large enough to contain the cable and the male threaded antenna fitting 62. Figure 15 shows assembly of the termination by screwing the female fitting 60 of the jumper cable 18 on to the antenna fitting 62 before moving the cold shrink tubular element 24 into position. The cold shrink tube 24, upon application of force by squeezing, shrinks to grip the jumper cable, as shown in Figure 16. Figure 17 illustrates a covered termination produced by crushing the support 32 over the antenna fitting 62 to allow the tubular element 24 to shrink around this fitting 62. Improved sealing may be obtained by including a seal 46 at either end of the cold shrink tubular member 24. Preferably the seal comprises a material that flows around fragments of the crushed core 32 to aid retention of the core fragments inside the tube that has shrunk around the termination. Previously described cable junction covers according to the present invention may also use a fluid sealant material as a containment matrix around fragments of a crushed support.

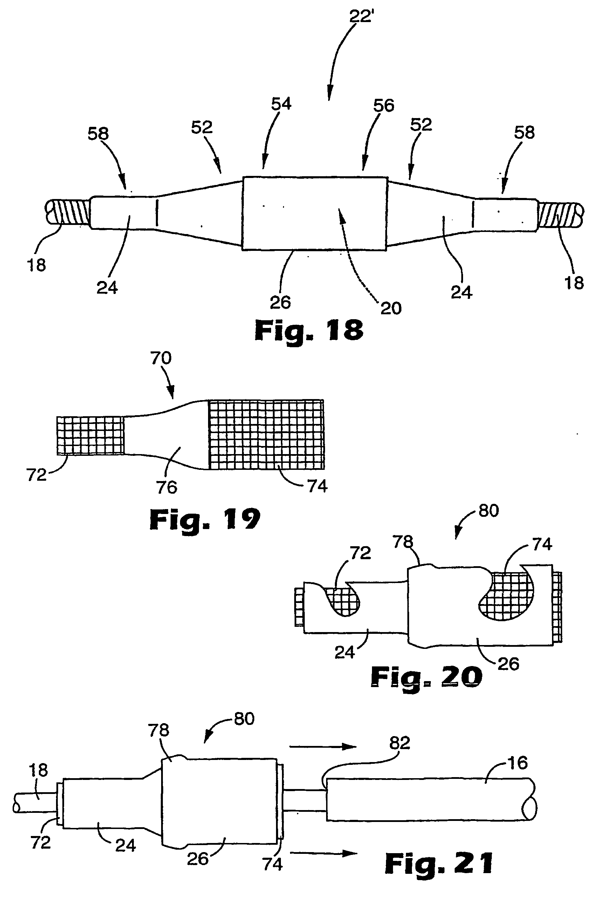

Fig. 18 shows another embodiment of a cold shrinkable cover 22' according to the present invention for covering a cable junction formed by connecting two coaxial cables 18 of the same or different outer diameters. In this case the length of the cable junction requires application of three cold shrink tubular elements 24, 26 to form a multi-part protective cover. This three part cover uses two cold shrinkable first tubular members 24 and one cold shrinkable second tubular member 26. The first tubular members 24 with their cable covering portions 58 cover the coaxial cables 18 while the connector covering portions 52 of the first tubular members 24 cover the portions of the connector 20 used to join the cables 18. The space occupied by the connector 20 between the connector covering portions 52 of the first tubular members 24 requires the second tubular member 26 as a protective cover with its opposite ends overlapping the first tubular members 24. A seal and sealant material may be used as described previously for improved sealing and retention of fragments produced by collapse of the crushable supports used to hold the three cold shrink tubular elements 24, 26 in expanded condition.

Another embodiment of multi-part covers according to the present invention provides a pre-mounted cover using at least two elastic tubular elements placed in expanded condition around a single crushable support that includes multiple crushable portions separated by at least one crush resistant transition zone. This special support may also be referred to herein as a multi-zone support core. A multi-zone support core supports overlapping elastic tubes in expanded condition. A distinguishing feature of a pre-mounted multi-part cover is the benefit it gives to the installer. Wireless communications antennas usually occupy an elevated position. Cable connections to an antenna frequently require the use of a raised platform to allow an installer to reach a cable connection or termination to install a protective cover. The difficulty of installation and the time to install a cover may be reduced using the minimum number of parts. Two part covers, previously discussed, require two separate cold shrink tubular elements. Placement of an effective multi-part protective cover around a connection requires correct positioning of the cold shrink tubes with sufficient overlap to provide a weather-tight seam after shrinkage. Operator skill is required for consistent installation of protective covers using separate cold shrink tubular elements.

Figure 19 illustrates a single multi-zone core 70 that accommodates at least two cold shrink tubular elements 24, 26. As shown, the support 70 has a design including a first crushable portion 72 of a first diameter and a second crushable portion 74 having a second diameter. A substantially non-crushable, transition zone 76 separates the first crushable portion 72 from the second crushable portion 74. The support 70 may be molded from plastic so that the crushable portions 72, 74 have a lattice structure that includes points of weakness to facilitate disintegration of the first 72 and second 74 crushable portions of the support during application of pressure.

Figure 20 is a partial cutaway side view showing positioning of a first expanded elastic tube 24 on one side of a multi-zone core 70 to cover the first crushable portion 72 and part of the transition zone 76. A larger diameter expanded elastic tube 26 occupies a position around the second crushable portion 74, extending over a portion of the transition zone 76 to form an overlapping seam 78 with the first expanded elastic tube 24. This completes the assembly of a pre-mounted cover 80 according to the present invention.

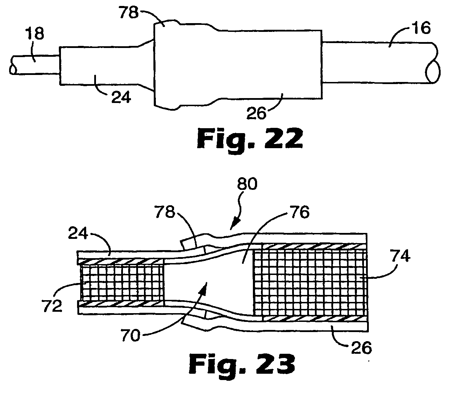

Figure 21 illustrates positioning of a pre-mounted cover 80 over a cable, e.g. a coaxial jumper cable 18 that is part of a cable junction 82 between a small diameter cable 18 and a larger diameter cable 16. The junction may be formed using a cable connector as described previously. After joining the cables together, the premounted cover 80 may be moved in the direction indicated by the arrows until it occupies a position at which the crushable portions 72, 74 are squeezed to allow the elastic tubular elements 24, 26 to shrink around the cables and the centrally located cable junction. The resulting covered junction is shown in Figure 22. Although the first crushable portion 72 and the second crushable portion 74 have collapsed, the transition zone 76 remains unbroken. The outline of the transition zone 76 is visible under the shrunk protective cover formed by the first and second elastic tubular elements 24, 26. The use of a pre-mounted cold shrink cover according to the present invention increases the probability of forming an effective overlapping seam 78 for each protective cover installed.

Figure 23 provides a cross sectional view corresponding to the pre-mounted cover structure 80 depicted in Figure 20. The figure includes a multi-zone support core 70, having a crush resistant transition zone 76 separating crushable portions 72, 74 covered by first and second elastic tubular elements 24, 26 including overlap 78 between the two.

Protective covers, for cable junctions, connections and splices and terminations and components thereof, have been described herein. These and other variations, which will be appreciated by those skilled in the art, are within the intended scope of this invention as claimed below. As previously stated, detailed embodiments of the present invention are disclosed herein; however, it is to be understood that the disclosed embodiments are merely exemplary of the invention that may be embodied in various forms.

## Claims

1. A cold shrink cover for a cable junction including a first cable (18) having a first outer diameter joined to a second cable (16) having a second outer diameter greater than the first outer diameter, the cold shrink cover comprising:
- a first elastic tubular member (24) held in expanded condition over a first hollow collapsible support (32) sized to receive a portion of the first cable (18) and a first portion of the cable junction; and
- a second elastic tubular member (26) held in expanded condition over a second hollow collapsible support (34) sized to receive a portion of the second cable (16), a second portion of the cable junction and an end portion of the first elastic tubular member (24), the first support (32) adapted to collapse during application of force to allow the first elastic tubular member (24) to shrink for covering the portion of the first cable (18) and the first portion of the cable junction, the second support (34) adapted to collapse during application of force to allow the second elastic tubular member (26) to shrink for covering the portion of the second cable (16), the second portion of the cable junction and the end portion of the first elastic tubular member (24).

2. The cold shrink cover of claim 1, including a multi-zone support core (70) having the first hollow collapsible support (72) integrally formed with the second hollow collapsible support (74).

3. The cold shrink cover of claim 2, wherein the multi-zone support core (70) includes a crush resistant transition zone (76) separating the first hollow collapsible support (72) from the second hollow collapsible support (74).

4. The cold shrink cover of any one of claims 1 to 3, wherein the cable junction includes a cable connector (20).

5. The cold shrink cover of any one of claims 1 to 4, wherein the first hollow collapsible support (32) includes a solid terminal extension (90) directly attached to a crushable core section (92).

6. The cold shrink cover of any one of claims 1 to 5, further including a sealing material to seal at least opposing ends of each of the first elastic tubular member (24) and the second elastic tubular member (26).

7. The cold shrink cover of any one of claims 1 to 6, wherein both of the first (18) and second cables (16) are coaxial cables.

## Patentansprüche

1. Kaltschrumpfumhüllung für eine Kabelverbindung, aufweisend ein erstes Kabel (18) mit einem ersten Außendurchmesser, das mit einem zweiten Kabel (16) mit einem zweiten Außendurchmesser verbunden ist, der größer als der erste Außendurchmesser ist, wobei die Kaltschrumpfumhüllung aufweist:
- ein erstes elastisches röhrenförmiges Bauteil (24), das in aufgeweitetem Zustand über einer ersten hohlen kollabierfähigen Stütze (32) gehalten ist, die größenmäßig so ausgelegt ist, um einen Abschnitt des ersten Kabels (18) und einen ersten Abschnitt der Kabelverbindung aufzunehmen, und
- ein zweites elastisches röhrenförmiges Bauteil (26), das in aufgeweitetem Zustand über einer zweiten hohlen kollabierfähigen Stütze (34) gehalten ist, die größenmäßig so ausgelegt ist, um einen Abschnitt des zweiten Kabels (16), einen zweiten Abschnitt der Kabelverbindung und einen Endabschnitt des ersten elastischen röhrenförmigen Bauteils (24) aufzunehmen, wobei die erste Stütze (32) so ausgelegt ist, daß sie bei Anwendung von Kraft kollabiert, um zu ermöglichen, daß das erste elastische röhrenförmige Bauteil (24) zum Umhüllen des Abschnitts des ersten Kabels (18) und des ersten Abschnitts der Kabelverbindung schrumpft, die zweite Stütze (34) so ausgelegt ist, daß sie bei Anwendung von Kraft kollabiert, um zu ermöglichen, daß das zweite elastische röhrenförmige Bauteil (26) zum Umhüllen des Abschnitts des zweiten Kabels (16), des zweiten Abschnitts der Kabelverbindung und des Endabschnitts des ersten elastischen röhrenförmigen Bauteils (24) schrumpft.

2. Kaltschrumpfumhüllung nach Anspruch 1, aufweisend einen mehrzonigen Stützkern (70), dessen erste hohle kollabierfähige Stütze (72) zusammen mit der zweiten hohlen kollabierfähigen Stütze (74) einstückig ausgebildet ist.

3. Kaltschrumpfumhüllung nach Anspruch 2, wobei der mehrzonige Stützkern (70) eine bruchbeständige Übergangszone (76) aufweist, welche die erste hohle kollabierfähige Stütze (72) von der zweiten hohlen kollabierfähigen Stütze (74) trennt.

4. Kaltschrumpfumhüllung nach einem der Ansprüche 1 bis 3, wobei die Kabelverbindung einen Kabelverbinder (20) aufweist.

5. Kaltschrumpfumhüllung nach einem der Ansprüche 1 bis 4, wobei die erste hohle kollabierfähige Stütze (32) eine massive Enderweiterung (90) aufweist, die direkt an einem zerbrechbaren Kernabschnitt (92) befestigt ist.

6. Kaltschrumpfumhüllung nach einem der Ansprüche 1 bis 5, ferner aufweisend ein Dichtmaterial zum Abdichten mindestens von entgegengesetzten Enden jedes des ersten elastischen röhrenförmigen Bauteils (24) und des zweiten elastischen röhrenförmigen Bauteils (26).

7. Kaltschrumpfumhüllung nach einem der Ansprüche 1 bis 6, wobei das erste Kabel (18) und das zweite Kabel (16) beide Koaxialkabel sind.

## Revendications

1. Couverture rétractable à froid pour une jonction de câble, comprenant un premier câble (18) présentant un premier diamètre extérieur joint à un deuxième câble (16) présentant un deuxième diamètre extérieur plus grand que le premier diamètre extérieur, la couverture rétractable à froid comprenant:
- un premier élément tubulaire élastique (24) maintenu dans un état expansé au-dessus d'un premier support écrasable creux (32) dimensionné pour recevoir une partie du premier câble (18) et une première partie de la jonction de câble; et
- un deuxième élément tubulaire élastique (26) maintenu dans un état expansé au-dessus d'un deuxième support écrasable creux (34) dimensionné pour recevoir une partie du deuxième câble (16), une deuxième partie de la jonction de câble et une partie d'extrémité du premier élément tubulaire élastique (24), le premier support (32) étant conçu pour s'écraser pendant l'application d'une force de manière à permettre au premier élément tubulaire élastique (24) de se rétracter pour recouvrir la partie du premier câble (18) et la première partie de la jonction de câble, le deuxième support (34) étant conçu pour s'écraser pendant l'application d'une force de manière à permettre au deuxième élément tubulaire élastique (26) de se rétracter pour recouvrir la partie du deuxième câble (16), la deuxième partie de la jonction de câble et la partie d'extrémité du premier élément tubulaire élastique (24) .

2. Couverture rétractable à froid selon la revendication 1, comprenant un noyau de support à zones multiples (70) avec le premier support écrasable creux (72) intégralement formé avec le deuxième support écrasable creux (74).

3. Couverture rétractable à froid selon la revendication 2, dans laquelle le noyau de support à zones multiples (70) comprend une zone de transition résistante à l'écrasement (76) séparant le premier support écrasable creux (72) du deuxième support écrasable creux (74).

4. Couverture rétractable à froid selon l'une quelconque des revendications 1 à 3, dans laquelle la jonction de câble comprend un connecteur de câble (20).

5. Couverture rétractable à froid selon l'une quelconque des revendications 1 à 4, dans laquelle le premier support écrasable creux (32) comporte une extension terminale solide (90) directement attachée à une section de noyau écrasable (92).

6. Couverture rétractable à froid selon l'une quelconque des revendications 1 à 5, comprenant en outre une matière d'étanchéité destinée à isoler au moins des extrémités opposées de chacun des premier élément tubulaire élastique (24) et deuxième élément tubulaire élastique (26).

7. Couverture rétractable à froid selon l'une quelconque des revendications 1 à 6, dans laquelle le premier câble (18) et le deuxième câble (16) sont tous les deux des câbles coaxiaux.
